# EUROPÄISCHE PATENTSCHRIFT

(11) **EP 2 204 244 B1**
(45) Veröffentlichungstag und Bekanntmachung des Hinweises auf die Patenterteilung: **12.09.2012**
(21) Anmeldenummer: 09177139.4
(22) Anmeldetag: 26.11.2009
(51) Int. Cl.: B21K 1/56, F16B 25/00, F16B 33/02

(54) **Verfahren zur Herstellung einer gewindefurchenden Schraube**
Method for producing a thread moulding screw
Procédé de fabrication d'une vis autotaraudeuse

(30) Priorität: 17.12.2008 DE 102008054824
(43) Veröffentlichungstag der Anmeldung: 07.07.2010
(73) Patentinhaber: HILTI Aktiengesellschaft, 9494 Schaan (LI)
(72) Erfinder: Huber, Franz, 86865, Markt Wald (DE); Pleil, Martin, 6805, Feldkirch (AT); Hoffmann, Carl, 88131, Bodolz (DE); Vorhauer, Andreas, 6832, Sulz (AT); Oppeneiger, Simon, 6973, Hoechst (AT); Aumüller, Berthold, 92655, Grafenwöhr (DE); Oberndorfer, Georg, 6800, Feldkirch (AT); Gahn, Jürgen, 9450, Altstätten (CH); Achleitner, Corinna, 6700, Bludenz (AT)

(56) Entgegenhaltungen:
- EP-A1- 1 655 498

## Beschreibung

Die Erfindung betrifft ein Verfahren zur Herstellung einer gewindefurchenden Schraube, der im Patentanspruch 1 genannten Art, sowie eine Prägevorrichtung zur Durchführung des Verfahrens.

Gewindefurchende Schrauben weisen einen Schaft auf, der wenigstens bereichsweise mit einem Gewinde als Aussengewinde versehen ist und der beispielsweise an einem Ende einen Schraubenkopf als Lastangriffsmittel aufweist. Damit gewindefurchende beziehungsweise gewindeschneidende Schrauben ein Gegengewinde in den Untergrund furchen können, wird das Gewinde zur Erhöhung der Festigkeit beispielsweise bereichsweise gehärtet. Für Aussenanwendungen werden auch Schrauben, wie Betonschrauben, aus korrosionsbeständigen Stahlwerkstoffen hergestellt, welche sich normalerweise nicht durch eine Wärmebehandlung soweit in der Festigkeit steigern lassen, dass ein sicheres Einfurchen in den Beton möglich ist.

Aus der EP 1 595 080 B1 ist eine gewindefurchende Schraube aus einem Metall bekannt, bei der Schneidkörper aus einem Metall mit einem höheren Kohlenstoffanteil angeschweisst sind. Die Schneidkörper weisen somit eine Härte auf, die grösser als die Härte der Schraube beziehungsweise des Gewindes ist. Die Schneidkörper weisen im angeschweissten Zustand einen kleinen Überstand zur Aussenkontur des Gewindes auf.

Nachteilig an der bekannten Lösung ist, dass beim Anschweissen der Schneidkörper der Grundwerkstoff zumindest des Gewindes beziehungsweise der Schraube in diesem Bereich ausreichend aufgeweicht werden muss, damit der Schneidkörper in das Gewinde eingedrückt werden kann. Nur so kann gemäss der EP 1 595 080 B1 der Schneidkörper ausreichend im Gewinde beziehungsweise im Kern verankert und ein übermässiger Überstand über die Aussenkontur des Gewindes verhindert werden. Aufgrund der dazu erforderlich langen Prozessdauer wird das Schraubenmaterial örtlich stark erhitzt, was zu einer Gefügeänderung des Grundmaterials führt und zu einer Rissbildung im Material führen kann. In dem Festlegebereich kann die Korrosionsbeständigkeit des Schafts infolge der Wärmeeinwirkung bereichsweise abnehmen.

Die EP 1655498 A1 offenbart ein Verfahren zum Herstellen einer Schraube, bei dem zunächst eine Schraube mit zumindest einem wenigstens bereichsweise umfänglich an einem Schaft angeordneten Gewinde erstellt wird und anschliessend in dem Gewinde Aussparungen ausgenommen werden, wobei als Schneidmittel Schweissgut mittels Laserschweissen in den Aussparungen angeordnet wird.

Aufgabe der Erfindung ist es, ein Verfahren zur Herstellung einer gewindefurchenden Schraube, insbesondere aus einem korrosionsbeständigen Material, mit eingeschweissten Schneidkörpem zu schaffen, welches die vorgenannten Nachteile vermeidet und eine einfache Fertigung der Schraube ermöglicht.

Die Aufgaben sind durch die Merkmale der unabhängigen Ansprüche gelöst. Vorteilhafte Weiterbildungen sind in den Unteransprüchen dargelegt.

Gemäss der Erfindung umfasst das Verfahren zur Herstellung einer gewindefurchenden Schraube, die einen Schaft und zumindest ein einstückig mit dem Schaft ausgebildetes und wenigstens bereichsweise umfänglich an diesem angeordnetes Gewinde aufweist, die folgenden Schritte.

Zuerst wird das Gewinde am Schaft z. B. in einem Walzverfahren ausgebildet. Anschliessend werden mehrere Aussparungen beziehungsweise Vertiefungen in das Gewinde geprägt, wobei das Material der Schraube in diesem Bereich zumindest teilweise verfestigt wird. Dann werden mehrere kompakte Schneidkörper in die zuvor erstellten Aussparungen im Gewinde eingeschweisst, wobei die Schneidkörper aus einem Hartstoff gefertigt sind und eine Härte grösser als die Härte des Gewindes aufweisen.

Die Schneidkörper weisen beispielsweise eine im Gewindeverlauf verlaufende Erstreckung auf, die der Erstreckung der entsprechenden Aussparungen im Gewinde entsprechen. Durch die Anordnung der Schneidkörper in Aussparungen im Gewinde erfolgt eine geringere Aufschmelzung des Grundwerkstoffs des Gewindes beziehungsweise der Schraube, womit eine Korrosionsbeständigkeit der Schraube weitgehend auch im Festlegebereich der Schneidkörper erhalten bleibt. Die Aussparung zur Aufnahme eines Schneidkörpers weist beispielsweise eine Erstreckung in Richtung des Gewindeverlaufs auf, die im Wesentlichen der korrespondierenden Erstreckung des Schneidkörpers im angeordneten Zustand desselben in dem Gewinde entspricht.

Die Aussparungen werden beim Prägen in nur einem Umformschritt in das Gewinde eingebracht, wobei die erstellte Aussparung beziehungsweise Vertiefung bis in den Kern der Schraube reichen kann. Die Aussparungen werden beispielsweise punkt- oder linienförmig ausgebildet. Unter punktförmig wird in diesem Zusammenhang eine Aussparung verstanden, deren Längserstreckung entlang des Gewindes maximal dem 1.5-fachen der Breitenerstreckung des Gewindes am Gewindegrund, d. h. an der Schaftaussenseite entspricht. Unter linienförmig wird in diesem Zusammenhang eine Aussparung verstanden, die eine Längserstreckung entlang des Gewindes von mehr als das 1.5-fache der Breitenerstreckung des Gewindes am Gewindegrund, d. h. an der Schaftaussenseite aufweist.

Die kompakten Schneidkörper sind durch das Einschweissen in die Aussparungen derart stoffschlüssig mit dem Gewinde verbunden, dass diese in wie auch entgegen der Einschraubrichtung der gewindefurchenden Schraube sowie radial ausreichend an der Schraube gehalten sind. Der Verschleiss des einstückig mit dem Schaft ausgebildeten Gewindes der Schraube ist auch bei harten mineralischen Untergründen, wie hochfesten Betonsorten gegenüber einer gewindefurchenden Schraube ohne Schneidkörper gesenkt, wobei der gewindefurchende Prozess während dem Setzen der gewindefurchenden Schraube verbessert ist. Trotz dem vorteilhaften Setzverhalten bleibt die Korrosionsbeständigkeit der Schraube weitgehend erhalten, wobei durch den geringen Verschleiss des Gewindes höhere Lastwerte gegenüber bestehenden Systemen bei einer gesetzten Schraube erreicht werden. Des Weiteren ist keine zusätzliche Bearbeitung des Kerns erforderlich, was sich z. B. auf die Korrosionsbeständigkeit sowie auf eine wirtschaftliche Herstellung der gewindefurchenden Schraube ebenfalls vorteilhaft auswirkt. Die Schraube ist vorteilhaft aus einem austenitischen korrosionsbeständigen Stahl gefertigt.

Die Schneidkörper weisen vorteilhaft bereits eine ihrer Funktion entsprechende Schneidgeometrie auf und erfüllen diese Funktion direkt nach der Festlegung im Gewinde. Eine aufwändige, mechanische Nachbearbeitung der in das Gewinde eingeschweissten Schneidkörper durch beispielsweise Schleifen, Fräsen oder Härten ist nicht erforderlich. Die Randschichthärte der Schneidkörper und damit die vorteilhaften gewindefurchenden Eigenschaften der Schneidkörper bleiben erhalten.

Die Form der Schneidkörper und deren Anzahl sind frei wählbar und werden vorteilhaft auf die zu erzielende Wirkung abgestellt. Beispielsweise weisen die Schneidkörper eine kugelähnliche, zylinderförmige, quaderförmige, kegelförmige oder pyramidenförmige Ausgestaltung auf. Die Schneidkörper können auch als so genannter Schneidzahn ausgebildet sein, wie er aus der Abbruch- und Bergbautechnik bekannt ist. Um das gewindefurchende Verhalten der gewindefurchenden Schraube zusätzlich zu beeinflussen, können die Schneidkörper auch geneigt zu einer an die Aussenkontur des Gewindes angelegte Tangente angeordnet sein. Der Neigungswinkel beträgt beispielsweise 5° bis 15°.

Die Anzahl der im Gewinde angeordneten Schneidkörper ist von der Länge des Gewindes und der zu verrichtenden Furchung sowie des Untergrundmaterials abhängig, in das die gewindefurchende Schraube gesetzt werden soll. In einer vorteilhaften Ausführung der erfindungsgemässen gewindefurchenden Schraube sind nur in einem Bereich ausgehend von dem setzungsrichtungsseitigen Ende eine gewisse Anzahl z. B. von vier bis fünfzehn Schneidkörpern beabstandet zueinander im Gewinde vorgesehen, wobei der Rest des Gewindes keine Schneidkörper aufweist. Um bestimmte Setzeigenschaften zu erreichen, können auch unterschiedlich ausgebildete Schneidkörper an einer gewindefurchenden Schraube angeordnet sein.

Vorteilhaft setzen die festgelegten Schneidkörper das Gewinde zumindest bereichsweise harmonisch fort, wodurch sich vorteilhafte Furcheigenschaften der Schraube ergeben sowie ein geringer Verschleiss des Gewindes erreicht wird. Alternativ dazu ragen die festgelegten Schneidkörper zumindest bereichsweise radial nach aussen über das Gewinde, wodurch eine starke Furchung und somit ein erhöhter Abbau des gefurchten Untergrundes erzeugt wird.

Bei der Anordnung von mehreren Schneidmitteln entlang des Gewindeverlaufs stehen beispielsweise die dem setzungsrichtungsseitigen Ende zugewandten, schweisstechnisch in den Aussparungen festgelegten Schneidkörper radial vor und die nachfolgenden Schneidkörper nehmen in deren radialem Überstand kontinuierlich ab, bis deren radialer Überstand der radialen Erstreckung des Gewindes entspricht und die Schneidkörper somit das Gewinde harmonisch fortsetzen.

Zusätzlich zu den kompakten Schneidkörpern aus Hartstoff können auch aus einem Schweissgut gefertigte Schneidkörper am Gewinde angeordnet werden, die beispielsweise in einem Metallschutzgasschweissverfahren oder mittels Lasercladding gefertigt sind. Diese zusätzlichen Schneidmittel werden je nach Anforderungen vorteilhaft ebenfalls in zuvor geprägten Aussparungen an dem Gewinde angeordnet. Die zusätzlichen Schneidmittel unterstützen die in den Aussparungen eingeschweissten, kompakten Schneidkörper aus einem Hartstoff beim Furchen des Gegengewindes im Untergrund. Beispielsweise sind die aus einem Schweissgut gefertigten Schneidkörper alternierend zu den kompakten Schneidkörpern aus Hartstoff an dem Gewinde vorgesehen. Alternativ sind in dem Bereich des Gewindes, der zuerst mit dem Untergrund in Kontakt kommt, kompakte Schneidkörper aus Hartstoff in Aussparungen und nachfolgend Schneidkörper aus Schweissgut in Aussparungen oder direkt auf dem Gewinde angeordnet. In Abhängigkeit der Härte der angeordneten Schneidkörper können in einer weiteren Alternative in dem Bereich des Gewindes, der zuerst mit dem Untergrund in Kontakt kommt, Schneidkörper aus Schweissgut und nachfolgend kompakte Schneidkörper aus Hartstoff in dem Gewinde angeordnet sein.

Vorzugsweise sind das Prägen der Aussparungen und das Einschweissen der kompakten Schneidkörper direkt miteinander verkettet, womit die Schraube für das Einschweissen der Schneidkörper in die Aussparungen nicht nochmals ausgerichtet werden muss. Beispielsweise wird die Schraube beim Prägen der Aussparungen von einem Manipulator gehalten, anschliessend von diesem in die Schweissstation bewegt und während dem Schweissvorgang von diesem gehalten.

Bevorzugt werden mehrere Aussparungen gleichzeitig in das Gewinde geprägt, womit die Prozessgeschwindigkeit erhöht werden kann und sich die Standzeit des Werkzeug, z. B. eines Prägestempels, erhöht.

Vorzugsweise werden mehrere aufeinanderfolgende Aussparungen in einem Abstand zueinander geprägt, der sich von einem freien Endbereich des Schafts ausgehend entlang des Verlaufs des Gewindes vergrössert. Im Bereich des Gewindes, der beim Setzen der gewindefurchenden Schraube zuerst mit dem Untergrund in Anlage kommt, sind vorteilhaft die Schneidkörper nah bei einander angeordnet. In einem dem setzrichtungsseitigen Ende abgewandten Abschnitt können die Schneidkörper weiter voneinander beabstandet sein, da diese Schneidkörper im Wesentlichen nur eine nachfurchende Wirkung aufweisen und lediglich einem vorteilhaften Setzvorgang der Schraube in den Untergrund dienen.

Bevorzugt weisen die Aussparungen nach dem Prägen jeweils einen Bodenabschnitt auf, der radial zum äusseren Umfang des Schafts beabstandet ist. Der Bodenabschnitt der Aussparung ist vorteilhaft derart zum äusseren Umfang des Schafts beabstandet, dass beim Anschweissen der Schneidkörper in der Aussparung nur Material des an dem Schaft ausgebildeten Gewindes aufgeschmolzen wird und somit der Schaft an sich höchstens geringfügig einer Wärmebeanspruchung ausgesetzt wird. Die Korrosionsbeständigkeit des Schafts einer Schraube aus einem korrosionsbeständigen Material bleibt weitgehend erhalten.

Vorzugsweise weisen die Aussparungen nach dem Prägen Wandungen auf und der in der Aussparungen zu liegen kommende Schneidkörper wird zumindest zu einer der Wandungen beabstandet angeordnet. Damit werden definierte Freiräume für abgetragenes Material bereitgestellt, was zu einem verbesserten Gewindefurchprozess und somit zu einem erleichterten Setzverhalten der erfindungsgemässen Schraube führt. In einer vorteilhaften Ausführungsform der Schraube ist der Schneidkörper lediglich an dem Bodenabschnitt der Aussparung schweisstechnisch festgelegt und zu beiden seitlichen Wandungen der Aussparung beabstandet angeordnet. Diese freistehende Anordnung des Schneidmittels in der Aussparung z. B. in Kombination mit einer ovaloiden oder kugelförmigen Ausgestaltung des Schneidkörpers führt zu einem vorteilhaften Einschneidverhalten beziehungsweise Gewindefurchprozess und somit zu einem verbesserten Setzverhalten. Dadurch senkt sich einerseits die Setzzeit bei einer Schraube und andererseits muss ein geringeres Drehmoment gegenüber den herkömmlichen gewindefurchenden Schrauben zum Setzen der Schraube aufgebracht werden, was wesentlich zur Wirtschaftlichkeit der mit dem erfindungsgemässen Verfahren hergestellten Schraube beiträgt.

Alternativ wird der Schneidkörper direkt anliegend zu einer der Wandungen der Aussparung und beabstandet zu der anderen, dieser gegenüberliegenden Wandung angeordnet, womit ein vor, hinter oder seitlich neben dem Schneidkörper definierter Freiraum für abgetragenes Material bereitgestellt wird.

Bevorzugt werden die kompakten Schneidkörper mittels elektrischem Widerstandsschweissen in den Aussparungen festgelegt, was eine ausreichende stoffschlüssige Festlegung der Schneidkörper in den Aussparungen sicherstellt. Beim elektrischen Widerstandschweissen wird zwischen zwei Körpern ein hoher Strom zum Fliessen gebracht und gleichzeitig die beiden Körper mit Druck zusammengepresst. An der Stelle des grössten elektrischen Widerstandes, in der Regel am Übergang zwischen den beiden Körpern, entsteht eine grosse Wärme, welche angrenzendes Grundmaterial aufschmilzt, wodurch eine Verbindung zwischen den Körpern geschaffen wird. Dabei können je nach gewünschter Qualität der Schweissung und Einrichtung unterschiedliche Arten von Widerstandsschweissverfahren, wie z. B. das Spitzenzündungsverfahren zur Anwendung kommen. Vorteilhaft sollten Verfahren gewählt werden, die geringe Wärmeeinflusszonen im Grundwerkstoff, insbesondere des Schafts, erzeugen und kurze Taktzeiten ausweisen. Dadurch ist die gewindefurchende Schraube nicht nur einfach herstellbar, sondern die Anordnung der Schneidkörper hat nur einen geringen Einfluss auf die Korrosionsbeständigkeit der Schraube.

Alternative Schweissverfahren zur Festlegung der kompakten Schneidkörper in den Aussparungen sind das Reibschweissen, Orbitalschweissen, Laserschweissen oder Ultraschallschweissen.

Vorzugsweise erfolgt der Schweissvorgang zur Festlegung der Schneidkörper in den Aussparungen in mehreren Phasen, so dass die kompakten Schneidkörper mit speziell für diese Anwendung optimierten Schweissprogrammen an dem Gewinde festlegbar sind. Die Schweissprogramme regeln die zeitlichen Abläufe und die Stärke der angelegten Schweissströme.

Bevorzugt sind die Phasen des Schweissvorgangs über einen geschlossenen Regelkreis geregelt, wobei das Ergebnis über Rückführung Einfluss auf die Stellgrössen der Schweissvorrichtung nimmt. Allfällig auftretende Störgrössen und Veränderungen werden bei der Regelung berücksichtigt und ausgeregelt. Durch eine entsprechende Regelung der Schweissparameter entstehen geringe Wärmeeinflusszonen, wodurch der insbesondere für die Korrosionsbeständigkeit wichtige Aufschmelzgrad des Kern- und/oder Gewindematerials minimiert wird. Die bereichsweise Aufmischung zwischen dem Grundwerkstoff und Schneidkörper sollte so gering wie möglich sein, jedoch ausreichend gross, damit der Schneidkörper sicher in dem Gewinde gehalten ist und die beim Setzen der Schraube auf ihn einwirkenden Kräfte in das Gewinde und somit in den Schaft ableitbar sind.

Vorzugsweise umfasst der Schweissvorgang eine erste Phase zum Aufwärmen des Grundmaterials der Schraube, eine zweite Phase zum Festlegen der Schneidkörper in den Aussparungen und eine dritte Phase zum Abkühlen der erstellten Schweissung.

Die erste Phase ist die geregelte Aufwärmphase in der durch örtlich begrenztes Erweichen der Fügepartner, hier das Schraubenmaterial und die kompakten Schneidkörper, eine sichere Kontaktierung und teilweise eine Vorwärmung der Fügepartner sicherstellt. Die zweite Phase ist die geregelte Schweissphase. Die dritte Phase ist die geregelte Abkühlphase, die insbesondere bei harten Schneidkörpern vorteilhaft ist, da damit die Rissbildung durch einen Thermoschock beim Abkühlen minimiert wird.

Bevorzugt bestehen die erste Phase, die zweite Phase und/oder die dritte Phase aus mehreren Teilphasen, womit das Aufwärmen, das Schweissen respektive das Abkühlen optimal an die Materialeigenschaften der Fügepartner angepasst werden kann.

Vorzugsweise ist die Steigung aus Delta Leistung zu Delta Zeit in der zweiten Phase grösser als in der ersten Phase, womit eine ausreichende Festlegung der Schneidkörper in den Aussparungen in vorteilhafter Weise sichergestellt ist.

Bevorzugt erfolgt der Schweissvorgang mit einer definierten Anpresskraft von 5 N bis 100 N, die von einer Halterung für den Schweisskörper auf den Schweisskörper kommend wirkt.

Vorteilhaft beträgt der Wert der definierten Anpresskraft 10 N bis 60 N und insbesondere 15 N bis 40 N. Mit der definierten, auf den Schneidkörper einwirkenden Anpresskraft wird ein exaktes Erreichen und Erstellen der korrekten Position des Schneidkörpers in der Aussparung sichergestellt, wobei zusätzlich eine ausreichende Festlegung der Schneidkörper in den Aussparungen in vorteilhafter Weise gewährleistet ist. Wird der Schweisskörper mittels Widerstandsschweissen in der Aussparung festgelegt, wird das Fliessen des Schweissstroms durch die auf den Schneidkörper einwirkenden Anpresskraft verbessert.

Vorzugsweise wirkt die definierte Anpresskraft mehrachsig, wobei die Anpresskraft vorteilhaft zwei- oder dreiachsig wirken kann. Durch die entsprechend der Mehrachsigkeit bedingten Beweglichkeit der Halterung für den Schweisskörper, beim Widerstandsschweissen z. B. eine Schweisselektrode, kann der kompakte Schneidkörper, insbesondere während der zweiten und gegebenenfalls während der dritten Phase, eine Relativbewegung zum Schaft und Gewinde der Schraube erfahren, wodurch die Anbindequalität der erstellten Festlegung in der Aussparung weiter verbessert wird. Eine beispielsweise zweiachsig wirkende, definierte Anpresskraft wirkt auf den Schneidkörper einerseits radial, d. h. in Richtung des Schafts, mit 5 N bis 100 N und andererseits tangential, d. h. in Richtung des Gewindes, mit 5 N bis 100 N. Dabei muss der Wert der Anpresskraftkomponenten der definierten Anpresskraft in radialer und tangentialer Richtung nicht zwingend identisch sein.

Eine Prägevorrichtung zum Prägen von Aussparungen in ein Gewinde einer Schraube weist zumindest eine Halterung zum Halten der Schraube während dem Prägevorgang und zumindest einen Prägestempel zum Erstellen der Aussparung im Gewinde der Schraube auf.

Der formgebende Abschnitt des zumindest einen Prägestempels wird entsprechend der gewünschten Ausgestaltung der zu erstellenden Ausnehmung ausgeformt. Die zumindest eine Halterung hält die Schraube in der entsprechenden Ausrichtung, damit die Aussparung an der gewünschten Position im Gewinde in wiederholbarer und präziser Art ausgeprägt werden kann.

Vorzugsweise sind mehrere Prägestempel zum gleichzeitigen Erstellen von mehreren Aussparungen vorgesehen, womit die Taktzeiten zur Herstellung der gewindefurchenden Schraube gegenüber einer Einzelausbildung jeder Aussparung reduziert werden. Dabei kann ein Prägestempel gleichzeitig mehr als eine Aussparung im Gewinde ausbilden. Alternativ werden mehrere Prägestempel vorgesehen, welche jeweils eine oder mehrere Aussparungen in einem Zustallvorgang im Gewinde der Schraube ausbilden.

Sind mehrere Prägestempel vorgesehen oder weist ein Prägestempel mehrere formgebende Abschnitte auf so sind diese vorteilhaft gleichartig ausgeformt.

Bevorzugt sind die zumindest eine Halterung und der zumindest eine Prägestempel einzeln angesteuert, wodurch die auf die Schraube wirkenden Haltekräfte als auch die Prägekräfte unterschiedlich einstellbar sind. Dadurch können Verformungen der Schraube oder des Gewindes und insbesondere Verbiegungen des Schafts vermieden werden.

Die Erfindung wird nachstehend anhand von Ausführungsbeispielen näher erläutert. Es zeigen:
- Fig.1 1: Ein erstes Ausführungsbeispiel der gewindefurchenden Schraube in der Seitenansicht;
- Fig. 2: eine Detailansicht des in Fig. 1 gezeigten Ausführungsbeispiels;
- Fig.3: eine Detailansicht eines zweiten Ausführungsbeispiels der gewindefurchenden Schraube;
- Fig. 4: eine schematische Darstellung einer Prägevorrichtung und eines Prägevorgangs;
- Fig.5: eine schematische Skizze einer Schneidkörperanordnung und eines Schweissvorgangs;
- Fig. 6: eine schematische Darstellung des Schweissprozesses anhand eines Schweissprofil-Diagramms;
- Fig. 7: eine schematische Skizze einer weiteren Schneidkörperanordnung; und
- Fig. 8: eine schematische Skizze einer weiteren Schneidkörperanordnung.

Grundsätzlich sind in den Figuren gleiche Teile mit den gleichen Bezugszeichen versehen.

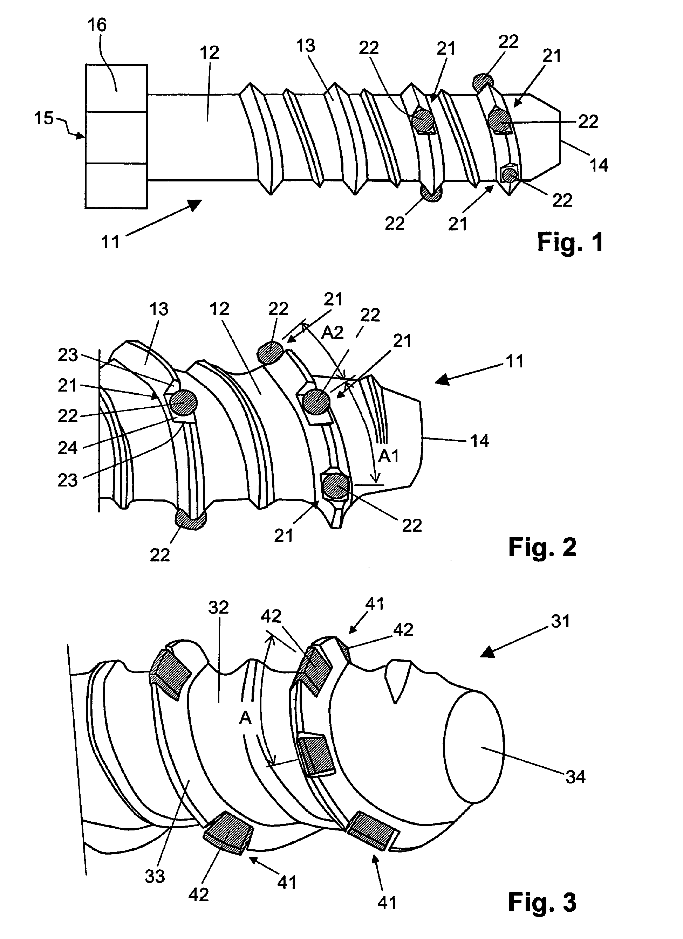

Die in den Figuren 1 und 2 dargestellte gewindefurchende Schraube 11 umfasst einen Schaft 12 aus einem korrosionsbeständigem Material, beispielsweise einem Stahlwerkstoff mit einem Kohlenstoffgehalt unter 0.5%, und einem einstückig am Schaft 12 ausgebildeten Gewinde 13, das sich bereichsweise von einem freien Endbereich 14 ausgehend in Richtung eines zweiten Endes 15 des Schafts 12 erstreckt. Am zweiten Ende 15 des Schafts 12 ist ein Sechskantkopf 16 als Drehmomentangriffsmittel beziehungsweise als Lastangriffsmittel für die Schraube 11 vorgesehen.

An dem Gewinde 13 sind mehrere längliche Aussparungen 21 zur Aufnahme von kompakten Schneidkörpern 22 aus einem Hartmetall in Form von Kugeln vorgesehen, deren Härte grösser als die Härte des Gewindes ist. Die Aussparungen 21 weisen seitliche Wandungen 23 sowie einen Bodenabschnitt 24 auf, der radial zum äusseren Umfang des Schafts 12 beabstandet ist. Die Schneidkörper 22 sind beabstandet zu den Wandungen 23 der Aussparungen 21 angeordnet und überragen das Gewinde bereichsweise radial nach aussen. Die Schneidkörper 22 sind zur Schaffung einer stoffschlüssigen Verbindung mittels elektrischem Widerstandsschweissen in dem Gewinde eingeschweisst. Die Aussparungen 21 und somit die Schneidkörper 22 weisen zueinander entlang des Verlaufs des Gewindes Abstände A1, A2, etc. auf, die sich ausgehend von dem freien Endbereich 14 des Schafts 12 in Richtung des zweiten Endes 15 des Schafts 12 vergrössern.

Die in Fig. 3 nur ausschnittsweise dargestellte gewindefurchende Schraube 31 weist ebenfalls einen Schaft 32 aus einem korrosionsbeständigem Metall auf, an dem ein Gewinde 33 ausgebildet ist, das sich bereichsweise von einem freien Endbereich 34 ausgehend in Richtung eines zweiten Endes des Schafts 32 erstreckt. An dem Gewinde 13 sind mehrere Aussparungen 41 zur Aufnahme von kompakten Schneidkörpern 42 aus einem Hartstoff in Form von Pyramidenstümpfen vorgesehen. Die Aussparungen 41 weisen eine Erstreckung in Richtung des Gewindeverlaufs auf, die der korrespondierenden Erstreckung der im Gewinde 33 angeordneten Schneidkörper 42 entspricht.

Die dem Auslauf des Gewindes benachbarten Schneidkörper 42 setzen das Gewinde 33 harmonisch fort und weisen in einem, dem zweiten Ende des Schafts zugewandten Bereich bereichsweise einen radialen Überstand nach aussen gegenüber dem Gewinde 33 auf. Die Schneidkörper 42 sind in dem Gewinde eingeschweisst. Die Aussparungen 41 und somit die Schneidkörper 42 können ebenfalls zueinander entlang des Verlaufs des Gewindes Abstände aufweisen, die sich ausgehend von dem freien Endbereich 34 des Schafts 32 in Richtung eines zweiten Endes des Schafts 32 vergrössern.

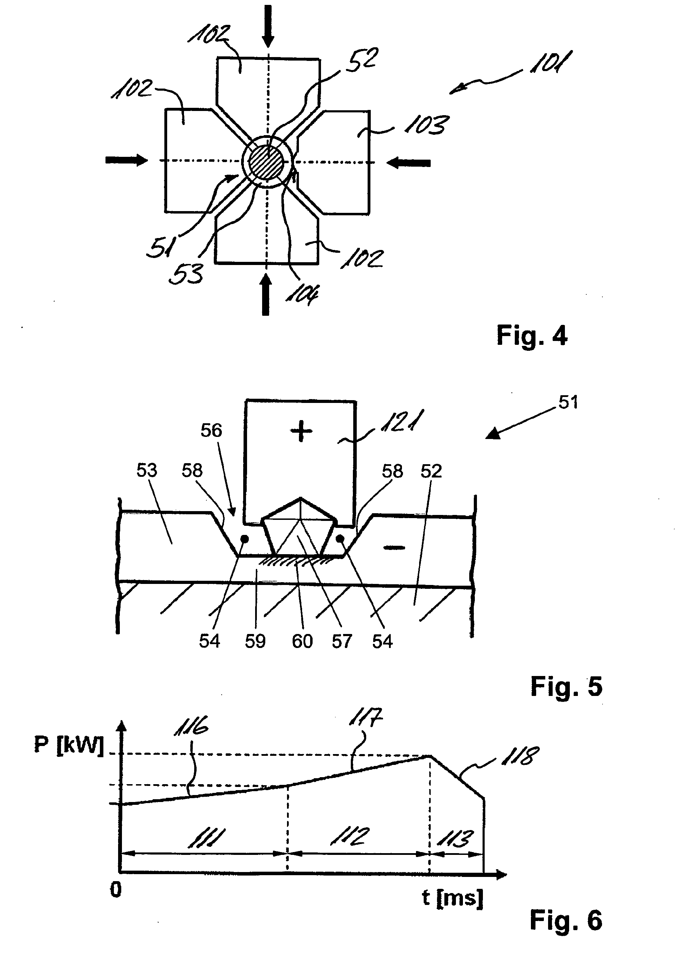

Anhand der Figuren 4 bis 6 wird nachfolgend das erfindungsgemässe Verfahren zur Herstellung einer gewindefurchenden Schraube 51 dargelegt, die beispielsweise aus einem korrosionsbeständigen Metall gefertigt ist. In der Figur 4 ist zudem eine Prägevorrichtung 101 zur Durchführung des Verfahrens gezeigt.

Zuerst wird an dem Schaft 52 der Schraube 51 ein bereichsweise umfänglich angeordnetes Gewinde 53 ausgebildet. Anschliessend wird die Schraube 51 der Prägevorrichtung 101 zum Prägen von Aussparungen 56 im Gewinde 53 zugeführt. Die Schraube 51 wird von drei, um 90° zueinander versetzt angeordneten Halterungen 102 in Position gehalten. Dann wird ein Prägestempel 103, der an seinem den Halterungen 102 zugewandten Ende einen formgebenden Abschnitt 104 aufweist, relativ zum Schaft 52 der Schraube 51 verfahren, wobei die beispielsweise längliche Aussparung 56 im Gewinde 53 ausgebildet wird. Die Halterungen 102 und der Prägestempel 103 sind einzeln angesteuert. Die Aussparung 56 weist seitliche Wandungen 58 und einen, zum äusseren Umfang des Schafts 52 beabstandeten Bodenabschnitt 59 auf.

Anstelle von drei Halterungen 102 und einem Prägestempel 103 kann die Prägevorrichtung auch mehr Prägestempel und weniger Halterungen aufweisen, so dass beim relativen Versetzen dieser Prägestempel zur Schraube hin gleichzeitig mehrere Aussparungen im Gewinde der Schraube erzeugt werden. Alternativ kann der Prägestempel auch mehr als einen formgebenden Abschnitt aufweisen, so dass beim relativen Versetzen dieses Prägestempels zur Schraube hin gleichzeitig mehrere Aussparungen im Gewinde der Schraube erzeugt werden.

Anschliessend wird die Schraube 51 einer hier nicht näher dargestellten Schweissstation zugeführt, in welcher der kompakte Schneidkörper 57 mittels einer elektrischen Widerstandsschweissung in der Aussparung 56 an dem Gewinde 53 festgelegt wird (Fig. 5). Der Schneidkörper 57 wird während dem Schweissvorgang von einer Halterung 121, hier eine Schweisselektrode, gehalten, wobei auf den Schweisskörper 57 von der Halterung 121 kommend eine definierte Anpresskraft von 15 N bis 40 N auf den Schweisskörper 57 wirkt. Diese Anpresskraft wirkt vorteilhaft mehrachsig, beispielsweise zweiachsig, einerseits radial in Richtung des Schafts 52 und andererseits tangential in Richtung des Gewindes 53.

Der kompakte Schneidkörper 57 ist beidseitig beabstandet zu den Wandungen 58 zur Schaffung von Freiräumen 54 für abgebautes Material angeordnet. Das Prägen der Aussparungen 56 und das Einschweissen der kompakten Schneidkörper 57 sind direkt verkettet, womit die Schraube 51 nach dem Prägevorgang für den nachgeschalteten Schweissvorgang nicht nochmals ausgerichtet werden muss.

Der Schweissvorgang zur Festlegung der Schneidkörper 57 in den Aussparungen 56 erfolgt in drei Phasen. In dem Diagramm gemäss Fig. 6 ist auf der Abszissenachse die Zeit in ms und auf der Ordinatenachse die zugeführte Leistung in kW abgetragen.

In der ersten Phase 111 des Schweissvorgangs wird sukzessive die Leistung über einen gewissen Zeitraum erhöht, wobei das Grundmaterial der Schraube 51 und der Schneidkörper 57 aufgewärmt werden. Der Abschnitt 116 der ersten Phase 111 verläuft mit einer positiven Steigung. Die erste Phase 111 kann aus mehreren Teilphasen bestehen, wobei der Verlauf des resultierenden Abschnitts nicht, wie z. B. in Fig. 6 gezeigt, zwingend linear verlaufen muss.

In der direkt anschliessenden zweiten Phase 112 erfolgt das Festlegen der Schneidkörper 57 in den Aussparungen 56, wobei in dieser Phase 112 gegenüber der ersten Phase 111 mehr Leistung über einen kürzeren Zeitraum zugeführt wird. Dadurch weist der Verlauf des Abschnitts 117 eine grössere positive Steigung aus Delta Leistung zu Delta Zeit als der Abschnitt 116 in der ersten Phase 111 auf. Die zweite Phase 112 kann ebenfalls aus mehreren Teilphasen bestehen, wobei der Verlauf des resultierenden Abschnitts nicht, wie z. B. in Fig. 6 gezeigt, zwingend linear verlaufen muss.

In der sich an die zweite Phase 112 anschliessenden dritten Phase 113 wird die Leistung über eine gewisse Zeit zurückgenommen, bis die Leistung der Leistung zu Beginn des Schweissvorgangs respektive der Leistung zu Beginn der ersten Phase 111 entspricht. In der dritten Phase 113 erfolgt eine Abkühlung der erstellten Schweissung. Der Abschnitt 118 der dritten Phase 113 weist eine negative Steigung auf. Die dritte Phase 113 kann ebenfalls aus mehreren Teilphasen bestehen, wobei der Verlauf des resultierenden Abschnitts nicht, wie z. B. in Fig. 6 gezeigt, zwingend linear verlaufen muss.

Mit der Regelung der Schweissvorrichtung über ein speziell für diese Anwendung optimiertes Schweissprogramm, wird die beim Schweissvorgang entstehende Wärmeeinwirkung auf einen Festlegebereich 60 begrenzt, der sich vorteilhaft nicht oder nur geringfügig bis in den Schaft 52 erstreckt.

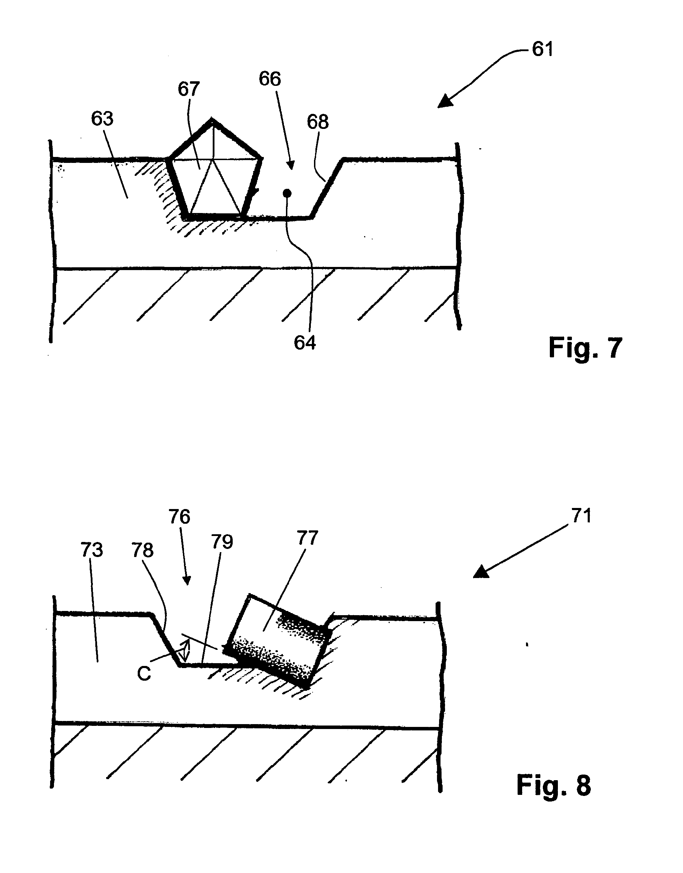

Die Figur 7 zeigt eine weitere Anordnung eines Schneidkörpers 67 in einer länglichen Aussparung 66 im Gewinde 63 einer Schraube 61, wobei der Schneidkörper 67 nur zu einer Wandung 68 der Aussparung 66 beabstandet angeordnet ist. Durch diese Art der Anordnung des Schneidkörpers 67 wird in der Aussparung 66 ein einseitig angeordneter und gegenüber der in Figur 5 gezeigten Anordnung des Schneidkörpers 57 grösserer Freiraum 64 geschaffen.

Als nicht abschliessendes Ausführungsbeispiel der Erfindung ist in Figur 8 ein kreiszylinderförmiger Schneidkörper 77 einer gewindefurchenden Schraube 71 gezeigt, der in einer Aussparung 76 im Gewinde 73 in einem Winkel C zu einem Bodenabschnitt 79 und beabstandet zu einer Wandung 78 angeordnet ist.

## Patentansprüche

1. Verfahren zur Herstellung einer gewindefurchenden Schraube (11; 31; 51; 61; 71) mit einem Schaft (12; 32; 52; 62) und zumindest einem einstückig mit dem Schaft (12; 32; 52) ausgebildeten und wenigstens bereichsweise umfänglich an diesem angeordneten Gewinde (13; 33; 53; 63; 73), umfassend die Schritte:
- Ausbilden des Gewindes (13; 33; 53; 63; 73) am Schaft (12; 32; 52);
- anschliessend Prägen von mehreren Aussparungen (21; 41; 56; 66; 76) in das Gewinde (13; 33; 53; 63; 73); und
- dann Einschweissen von mehreren kompakten Schneidkörpern (22; 42; 57; 67; 77) in die Aussparungen (21; 41; 56; 66; 76) im Gewinde (13; 33; 53; 63; 73), wobei die Schneidkörper (22; 42; 57; 67; 77) aus einem Hartstoff gefertigt sind und eine Härte aufweisen, die grösser als die Härte des Gewindes (13; 33; 53; 63; 73) ist.

2. Verfahren nach Anspruch 1, **dadurch gekennzeichnet, dass** mehrere Aussparungen (21; 41; 56; 66; 76) gleichzeitig in das Gewinde (13; 33; 53; 63; 73) geprägt werden.

3. Verfahren nach einem der Ansprüche 1 oder 2, **dadurch gekennzeichnet, dass** mehrere aufeinanderfolgende Aussparungen (21; 41) in einem Abstand (A) zueinander geprägt werden, der sich von einem freien Endbereich (14; 34) des Schafts (12; 32) ausgehend entlang des Verlaufs des Gewindes (13; 33) vergrössert.

4. Verfahren nach einem der Ansprüche 1 bis 3, **dadurch gekennzeichnet, dass** die Aussparungen (21; 41; 56; 66; 76) nach dem Prägen jeweils einen Bodenabschnitt (24; 59; 79) aufweisen, der radial zum äusseren Umfang des Schafts (12; 32; 52) beabstandet ist.

5. Verfahren nach einem der Ansprüche 1 bis 4, **dadurch gekennzeichnet, dass** die Aussparungen nach dem Prägen Wandungen (23; 58; 68; 78) aufweisen und der in der Aussparung zu liegen kommende Schneidkörper (22; 57; 67; 77) zumindest zu einer der Wandungen (23; 58; 68; 78) beabstandet angeordnet wird.

6. Verfahren nach einem der Ansprüche 1 bis 5, **dadurch gekennzeichnet, dass** die kompakten Schneidkörper (22; 42; 57; 67; 77) mittels elektrischen Widerstandsschweissen in den Aussparungen (21; 41; 56; 66; 76) festgelegt werden.

7. Verfahren nach einem der Ansprüche 1 bis 6, **dadurch gekennzeichnet, dass** der Schweissvorgang zur Festlegung der Schneidkörper (22; 42; 57; 67; 77) in den Aussparungen (21; 41; 56; 66; 76) in mehreren Phasen (111, 112, 113) erfolgt.

8. Verfahren nach Anspruch 7, **dadurch gekennzeichnet, dass** die Phasen (111, 112, 113) des Schweissvorgangs über einen geschlossenen Regelkreis geregelt sind.

9. Verfahren nach Anspruch 7 oder 8, **dadurch gekennzeichnet, dass** der Schweissvorgang eine erste Phase (111) zum Aufwärmen des Grundmaterials der Schraube (51) und des Schneidkörpers (57), eine zweite Phase (112) zum Festlegen der Schneidkörper (57) in den Aussparungen (66) und eine dritte Phase (113) zum Abkühlen der erstellten Schweissung umfasst.

10. Verfahren nach Anspruch 9, **dadurch gekennzeichnet, dass** die erste Phase (111), die zweite Phase (112) und/oder die dritte Phase (113) aus mehreren Teilphasen bestehen.

11. Verfahren nach Anspruch 9 oder 10, **dadurch gekennzeichnet, dass** die Steigung aus Delta Leistung zu Delta Zeit in der zweiten Phase (112) grösser als in der ersten Phase (111) ist.

12. Verfahren nach einem der Ansprüche 1 bis 11, **dadurch gekennzeichnet, dass** der Schweissvorgang mit einer definierten Anpresskraft von 5 N bis 100 N erfolgt, die von einer Halterung (121) für den Schweisskörper (57) auf den Schweisskörper (57) kommend wirkt.

13. Verfahren nach Anspruch 12, **dadurch gekennzeichnet, dass** die definierte Anpresskraft mehrachsig wirkt.

14. Prägevorrichtung zum Prägen von Aussparungen (56) in ein Gewinde (53) einer Schraube (51) mit zumindest einer Halterung (102) zum Halten der Schraube (51) während dem Prägevorgang und mit zumindest einem Prägestempel (103) zum Erstellen der Aussparung (56) im Gewinde (53) der Schraube (51).

15. Prägevorrichtung nach Anspruch 14, **dadurch gekennzeichnet, dass** mehrere Prägestempel zum gleichzeitigen Erstellen von mehreren Aussparungen (56) vorgesehen sind.

16. Prägevorrichtung nach Anspruch 14 oder 15, **dadurch gekennzeichnet, dass** die zumindest eine Halterung (102) und der zumindest eine Prägestempel (103) einzeln angesteuert sind.

## Claims

1. Method of producing a thread-forming screw (11; 31; 51; 61; 71) comprising a shank (12; 32; 52; 62) and at least one thread (13; 33; 53; 63; 73) formed in one piece with the shank (12; 32; 52) and arranged in at least some areas over the circumference thereof, including the steps of:
- forming the thread (13; 33; 53; 63; 73) on the shank (12; 32; 52);
- then stamping several recesses (21; 41; 56; 66; 76) into the thread (13; 33; 53; 63; 73), and
- then welding several compact cutting elements (22; 42; 57; 67; 77) into the recesses (21; 41; 56; 66; 76) in the thread (13; 33; 53; 63; 73), the cutting elements (22; 42; 57; 67; 77) being made of a hard material and having a hardness greater than the hardness of the thread (13; 33; 53; 63; 73).

2. Method according to claim 1, **characterised in that** several recesses (21; 41; 56; 66; 76) are stamped into the thread (13; 33; 53; 63; 73) at the same time.

3. Method according to either of claims 1 or 2, **characterised in that** several successive recesses (21; 41) are stamped at a distance (A) from one another that increases along the course of the thread (13; 33) departing from one free end region (14; 34) of the shank (12; 32).

4. Method according to one of claims 1 to 3, **characterised in that**, after the stamping operation, the recesses (21; 41; 56; 66; 76) each have a bottom portion (24; 59; 79) disposed radially at a distance from the outer circumference of the shank (12; 32; 52).

5. Method according to one of claims 1 to 4, **characterised in that**, after the stamping operation, the recesses have walls (23; 58; 68; 78) and the cutting element (22; 57; 67; 77) to be situated in the recess is arranged at a distance from at least one of the walls (23; 58; 68; 78).

6. Method according to one of claims 1 to 5, **characterised in that** the compact cutting elements (22; 42; 57; 67; 77) are fixed in the recesses (21; 41; 56; 66; 76) by means of electric resistance welding.

7. Method according to one of claims 1 to 6, **characterised in that** the welding process for fixing the cutting elements (22; 42; 57; 67; 77) in the recesses (21; 41; 56; 66; 76) takes place in several phases (111, 112, 113).

8. Method according to claim 7, **characterised in that** the phases (111, 112, 113) of the welding process are controlled via a closed-loop control circuit.

9. Method according to claim 7 or claim 8, **characterised in that** the welding process includes a first phase (111) for heating the base material of the screw (51) and the cutting element (57), a second phase (112) for fixing the cutting elements (57) in the recesses (66) and a third phase (113) for cooling the resulting weld.

10. Method according to claim 9, **characterised in that** the first phase (111), the second phase (112) and/or the third phase (113) consist/s of several sub-phases.

11. Method according to claim 9 or claim 10, **characterised in that** the slope of the delta power versus delta time curve is greater in the second phase (112) than in the first phase (111).

12. Method according to one of claims 1 to 11, **characterised in that** the welding process is carried out with a defmed contact force of 5 N to 100 N originating from a holder (121) for the welded element (57) and acting on the welded element (57).

13. Method according to claim 12, **characterised in that** the defined contact force acts multi-axially.

14. Stamping device for stamping recesses (56) into the thread (53) of a screw (51) comprising at least one holder (102) for holding the screw (51) during the stamping process and comprising at least one stamping die (103) for producing the recess (56) in the thread (53) of the screw (51).

15. Stamping device according to claim 14, **characterised in that** several stamping dies are provided for producing several recesses (56) at the same time.

16. Stamping device according to claim 14 or claim 15, **characterised in that** the at least one holder (102) and the at least one stamping die (103) are controlled individually.

## Revendications

1. Procédé pour fabriquer une vis autotaraudeuse (11 ; 31 ; 51 ; 61 ; 71) munie d'une tige (12 ; 32 ; 52 ; 62) et d'au moins un filetage (13 ; 33 ; 53 ; 63 ; 73) formé d'un seul tenant avec la tige (12 ; 32 ; 52) et agencé, au moins dans certaines zones, de manière circonférentielle sur celle-ci, comportant les étapes consistant à :
- former le filetage (13 ; 33 ; 53 ; 63 ; 73) sur la tige (12 ; 32 ; 52),
- estamper ensuite plusieurs évidements (21 ; 41 ; 56 ; 66 ; 76) dans le filetage (13 ; 33 ; 53 ; 63 ; 73), et
- puis souder plusieurs éléments de taille compacts (22 ; 42 ; 57 ; 67 ; 77) dans les évidements (21 ; 41 ; 56 ; 66 ; 76) dans le filetage (13 ; 33 ; 53 ; 63 ; 73), les éléments de taille (22 ; 42 ; 57 ; 67 ; 77) étant fabriqués à partir d'un matériau dur et présentant une dureté supérieure à la dureté du filetage (13 ; 33 ; 53 ; 63 ; 73).

2. Procédé selon la revendication 1, **caractérisé en ce que** plusieurs évidements (21 ; 41 ; 56 ; 66 ; 76) sont estampés en même temps dans le filetage (13 ; 33 ; 53 ; 63 ; 73).

3. Procédé selon l'une quelconque des revendications 1 ou 2, **caractérisé en ce que** plusieurs évidements successifs (21 ; 41) sont estampés à une certaine distance (A) les uns des autres qui augmente en partant d'une région d'extrémité libre (14 ; 34) de la tige (12 ; 32) le long de l'étendue du filetage (13 ; 33).

4. Procédé selon l'une quelconque des revendications 1 à 3, **caractérisé en ce que** les évidements (21 ; 41 ; 56 ; 66 ; 76) présentent chacun une partie de fond (24 ; 59 ; 79) après l'estampage qui est radialement espacée de la circonférence extérieure de la tige (12 ; 32 ; 52).

5. Procédé selon l'une quelconque des revendications 1 à 4, **caractérisé en ce que** les évidements présentent des parois (23 ; 58 ; 68 ; 78) après l'estampage et l'élément de taille (22 ; 57 ; 67 ; 77) positionné dans l'évidement est agencé espacé par rapport à au moins une des parois (23 ; 58 ; 68 ; 78).

6. Procédé selon l'une quelconque des revendications 1 à 5, **caractérisé en ce que** les éléments de taille compacts (22 ; 42 ; 57 ; 67 ; 77) sont fixés dans les évidements (21 ; 41 ; 56 ; 66 ; 76) au moyen d'un soudage par résistance électrique.

7. Procédé selon l'une quelconque des revendications 1 à 6, **caractérisé en ce que** le procédé de soudage pour fixer les éléments de taille (22 ; 42 ; 57 ; 67 ; 77) dans les évidements (21 ; 41 ; 56 ; 66 ; 76) a lieu en plusieurs phases (111, 112, 113).

8. Procédé selon la revendication 7, **caractérisé en ce que** les phases (111, 112, 113) du procédé de soudage sont régulées par une boucle de régulation fermée.

9. Procédé selon la revendication 7 ou 8, **caractérisé en ce que** le procédé de soudage inclut une première phase (111) pour chauffer le matériau de base de la vis (51) et l'élément de taille (57,) une deuxième phase (112) pour fixer l'élément de taille (57) dans les évidements (66) et une troisième phase (113) pour refroidir la soudure générée.

10. Procédé selon la revendication 9, **caractérisé en ce que** la première phase (111), la deuxième phase (112) et/ou la troisième phase (113) sont constituées de plusieurs phases partielles.

11. Procédé selon la revendication 9 ou 10, **caractérisé en ce que** la pente delta de puissance sur delta de temps lors de la deuxième phase (112) est supérieure à celle lors de la première phase (111).

12. Procédé selon l'une quelconque des revendications 1 à 11, **caractérisé en ce que** le procédé de soudage a lieu avec une force de pression définie de 5 N à 100 N, qui agit sur l'élément de taille (57) à partir d'un support (121) pour l'élément de taille (57).

13. Procédé selon la revendication 12, **caractérisé en ce que** la force de pression définie agit de manière multiaxiale.

14. Dispositif d'estampage pour estamper des évidements (56) dans un filetage (53) d'une vis (51) comportant au moins un support (102) pour maintenir la vis (51) pendant le procédé d'estampage et comportant au moins une matrice d'estampage (103) pour générer l'évidement (56) dans le filetage (53) de la vis (51).

15. Dispositif d'estampage selon la revendication 14, **caractérisé en ce que** plusieurs matrices d'estampage sont prévues pour générer simultanément plusieurs évidements (56).

16. Dispositif d'estampage selon la revendication 14 ou 15, **caractérisé en ce que** le au moins un support (102) et la au moins une matrice d'estampage (103) sont commandés individuellement.
